# EUROPEAN PATENT SPECIFICATION

(11) **EP 3 522 727 B1**
(45) Date of publication and mention of the grant of the patent: **26.01.2022**
(21) Application number: 17857938.9
(22) Date of filing: 04.10.2017
(51) Int. Cl.: A21C 7/01

(54) **ROUNDING BAR, DEVICE AND METHOD OF USING SAME**
RUNDUNGSSTANGE, VORRICHTUNG UND VERFAHREN ZUR VERWENDUNG DAVON
BARRE D'ARRONDISSEMENT, DISPOSITIF D'ARRONDISSEMENT ET PROCÉDÉ D'UTILISATION DE CEUX-CI

(30) Priority: 04.10.2016 US 201662403839 P
(43) Date of publication of application: 14.08.2019
(73) Proprietor: FME Food Machinery Engineering Ltd., Surrey, British Columbia V4N 4X8 (CA)
(72) Inventor: SCHMIDT, Norman, Burnaby, British Columbia V3J 7J7 (CA); BARAN, Adam, Vancouver, British Columbia V6H 2P3 (CA)
(74) Representative: AWA Denmark A/S
(86) International application number: PCT/IB2017/056101
(87) International publication number: WO 2018/065904

(56) References cited:
- DE-B- 1 028 952
- GB-A- 181 189
- US-A- 4 008 025
- US-A- 5 714 178
- US-A- 6 159 517
- US-A- 6 159 517
- US-B1- 6 303 169
- US-B1- 6 303 169
- US-B1- 6 506 042
- US-B2- 6 616 439

## Description

The present invention relates to a rounding bar according to the preamble of claim 1. The invention further relates to a device comprising such rounding bar, and a method using a rounding bar.

A rounding bar of the above kind is known from e.g. US 6,159,517 A and US 6,303,169 B1. Other rounding devices are known from e.g. DE 1 028 952 and GB 181,189.

### Technical Field

A rounding bar, device and method of using same are disclosed. A rounding bar, also known as a rounder bar, is typically used in equipment to round portions of semi-solid material portions. The device that employs a rounding bar is known as a rounding machine.

### Background

In the production of products made from semi-solid material portions such as, but not limited to, dough for bread, pizza bases, rolls, hot dog buns, hamburger buns, tortilla rounds and the like, it is important to transform a non-uniform, non-rounded portioned amount of material into a rounded generally spherical shape that has a final outward appearance that is consistent and smooth. As an example, when making pizza bases in commercial automated applications if a poorly rounded dough portion is used, there is a higher probability that the final product will be miss- shaped and its appearance may drop below acceptable standards for dimensions and workability. A miss-shaped dough portion can be harder to stretch out to a round pizza base and therefore requires manual intervention to correct the shape and size. This adds labour costs and lowers production rates. There can also be a problem with rounding blemishes that are created by the manner in which the semi-solid material is rolled against known rounding bars. One type of rounding blemish will typically have an appearance that looks similar to a "navel" on a Navel Orange and the severity of the blemish increases with the length of the continuous contoured working area of the rounding bar. This type of blemish will create issues when the dough ball is stretched and worked, for example, to create a flat pizza base. When stretched this type of blemish will almost always leave a flaw in the surface of the pizza, and if severe, the flaw will cause or be the source of a tear in the pizza base.

Rounding machines currently in use today typically employ at least one rounding bar, which is a contoured bar that is affixed at an angle to a moving surface. This can be, in some rounding machines, a bar that winds helically around the surface of a rotating truncated cone or vertical cylinder. In general, the rounding process is based, in part, on a rounding effect imparted by the rounding machine onto the semi-solid material portion, caused by the induced rolling action which takes place as the semi-solid material portion is forced against the contour and at the same time forced to roll down the length of the contour. Depending upon the design of the rounding machine, the inlet for receiving the semi-solid material portions can be at the small or large diameter end of the cone, with the exit at the opposite end.

By way of example, operation of a conical rounding machine is described herein with respect to a machine that uses an inverted cone with the inlet at the small diameter end at the bottom. In operation, a semi-solid material portion is deposited at the inlet in an interior cavity inside the rotating cone. A helical rounding bar, that is also known as a "shoe", winds its way out from the internal bottom to the top. As the cone rotates it deflects or otherwise moves the semi-solid material portion from the start of the helically-shaped rounding shoe where the semi-solid material portion is captured between the surface of the rotating rounding cone and the stationary rounding shoe. The semi-solid material portion is carried by the moving surface and travels at an angle to the path of the rotating cone, as determined by the slope of the fixedly mounted helix of the rounding bar that fits next to the moving surface of the cone. This resultant diagonal movement of the semi-solid material portion encourages mechanically induced movement in a pronounced rotation of the semi-solid material within the partially enclosed contour of the rounding shoe. This mechanically induced action of rotation as well as compaction of the semi-solid material by the contoured area of the rounding bar and the moving surface of the cone, rolls and rounds the semi-solid material into a generally spherical shape. A problem with these types of rounding shoes is that the rounding bar has a constant contoured shape resulting in a consistent contact surface between the rounding shoe and the surface of the cone. Once the semi-solid material portion begins to roll as it travels along the rounding bar, the consistent contact surface maintains the same axis of rotation which means that there is a point or a small area on the semi-solid material portion that no longer receives any rounding action and therefore does not become better rounded or more round. In addition, there will be a point on the semi-solid material portion that remains in contact with where the rounding bar meets the cone surface, and this is the point where a blemish can develop. This blemish is sometimes referred to as a triple point blemish, because of the convergence of the surface of cone surface, the matching surface of the rounding bar, and the axis of rotation of the rolling semi-solid material portion. This triple point blemish has an appearance which has been described herein as being similar to that of a navel on a Navel Orange.

In some cases, be it for manufacture or operation there are rounding shoes that are made in spaced helical sections where the semisolid material portion leaves one section and is dropped or otherwise transferred to another section., In these machines, the semi-solid material portion loses contact with the rounding bar between sections, In this transfer from one section to another section the semi-solid material portion can undergo an uncontrolled drop and change in its axis of rotation as it continues to roll as guided by the rounding shoe. This change in the axis of rotation can improve the rounding effect of the rounding machine by changing the area on the material portion that is at the contact point between the rounding bar and the cone surface, as well as the area of the material portion that faces away from the rounding shoe and the cone surface that is now worked upon. However, while this can yield improved results, since such machines rely upon the free fall of the semi-solid material portion dropping from one rounding bar section to the next, rounding can be inconsistent. Another problem with this approach is that it requires more space to employ spaced sections of rounding bars on a single moving surface.

Another limitation of these cone-shaped rounding machines is that they are significantly fixed as to the path of the rounding shoe as the shoe was machined so as to match the surface of the cone. Trying to change the path of the helix shoe in relation to the cone would result in a poor fit to the cone. So rounding machines of this design normally retain whatever helix pattern the rounding machine was manufactured with, and this limits any changes or adjustments that might be beneficial to make the machine more versatile for different types of dough or different sizes of material portions.

Yet another problem with cone shaped rounding machines is that they have a running clearance or gap between the cone surface and the rounding shoe where small bits of dough can come off from the dough portion as the dough portion travels along the rounding shoe. Some of these small bits of dough that come off can become a non-reusable waste product, and some pieces can fall to the bottom and be absorbed into other dough portions. However, this random loss of material and random addition of material results in some of the finished product being under weight, and some of the product being overweight, and randomness in material sizes further contributes to product inconsistencies.

There is also another type of rounding machine that uses a stationary inner cylinder that has a helical groove cut into its outer surface that winds from the bottom to the top of the cylinder. When in operation, an outer cylinder rotates around this inner cylinder. Dough portions are periodically dropped down the center of the stationary inner cylinder to the bottom of the machine where each dough portion is directed to an entry point of the helical groove. When the moving surface of the outer rotating cylinder engages the dough portion, it rolls up the helical passage way. Both this and the initially described inverted cone design can recover small fragments of dough that rub or shear off of the dough piece as it is acted upon by the helical shoe, such that subsequent dough portions pick them up and incorporate them into the next rounded dough portion. However, as described above, this contributes to randomness in the size and weight of the finished product. Like with the conical rounding machine, with a cylindrical rounding machine, the contour of the rounding bar or helical passage has a constant profile so there is no active control of the axis of rotation for the material portion and once an axis of rotation is established the material portion generally maintains the same axis of rotation.

An additional and newer rounding machine is known as an "inline rounder". An example of a prior art rounding machine of this type is described in U.S. Patent No. 4,306,850, which discloses an inline rounder that has a biased flexible foot that helps to keep material from being lost between the rounding bar and the conveyor belt by maintaining continuous contact despite surface irregularities. A rounding bar with a consistent contour is shown. United States Patent No. 6,382,952 discloses an inline rounder with rounding bar surface areas that have a non-occluding texture that reduces adherence of the semi-solid material portions to the rounding bar. In this patent the rounding bar is shown with enlarged entry and exit areas, and a working area that has a consistent contour. U.S. Patent No. 5,714,178 also discloses an inline rounder and it is also directed to textured features to minimize material adherence to the rounding bar. This patent shows a gradual taper from an entry area to a compression area, and then another gradual taper to an exit area. Such a gradual taper results in a corresponding gradual change in the axis of rotation such that after rolling against the rounding bar, there can still be blemishes such as three point blemishes and un-rounded non- contact areas on the surface of the semi-solid material portion.

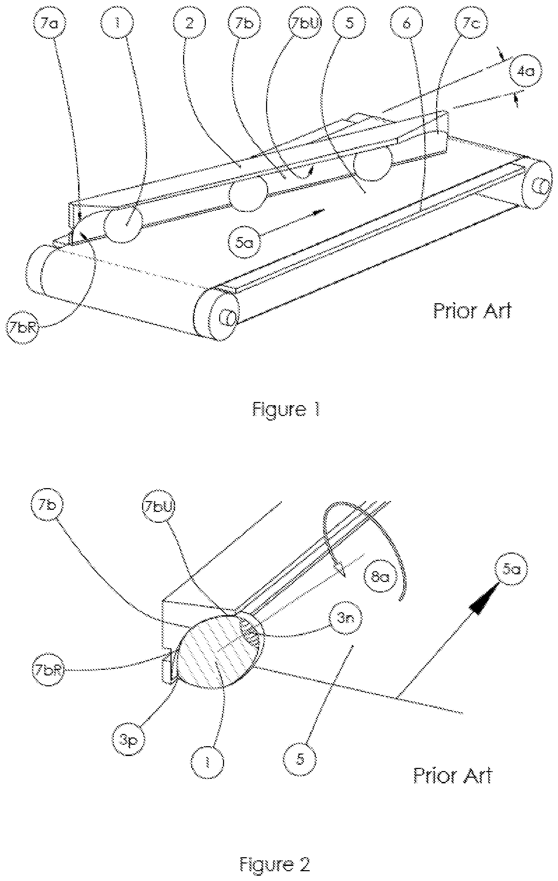

Inline rounders are further described with reference to the machines shown in Prior Art Figures 1 through 3. Contoured rounding bar 2 is held at an angle relative to direction of travel 5a of a wide and flat conveyor belt 5, which is supported underneath by conveyor bed 6. The angle that rounding bar 2 is held at relative to direction of travel 5a is shown in Figure 1 as angle of deflection 4a. Like with other rounding machines, the semi-solid material portions travel along a diagonal path relative to the direction of travel of a moving surface, and with an inline rounder, this diagonal path is determined by angle of deflection 4a. However, different from the conical and cylindrical rounding machines, an inline rounder is a horizontal process on a conveyor system so the direction and nature of the forces are more easily controlled and machines of this type can be set up to generate less waste.

Semi-solid material portion 1 is typically cut from a large mass of semi-solid material by a portioning machine, which cuts a piece of a larger mass of semi-solid material into a specifically sized portion that is not round and typically has edges and corners. By way of example, the portioning machine can extrude a cylinder of material from a round opening and then cut it into metered portions that are deposited onto conveyor belt 5 just in front of entry area 7a on continuous contour rounding bar 2. Entry area 7a can have a cut back opening as shown or can be bell or funnel shaped to assist with receiving the cylinder-shaped semi-solid material portion as it is carried forward on conveyor belt 5. As shown in Figure 1, it is common in the operation of a rounding machine for there to be a series of semi-solid material portions 1 in passage simultaneously along the length of rounding bar 2 so as to facilitate higher production rates.

Once engaged with contoured rounding bar 2, the forces acting on semi-solid material portion 1 cause it to roll along working area 7b in contact with both rounding bar 2 and conveyor belt 5. Working area 7b is the length of rounding bar 2 from entry area 7a to exit area 7c. In working area 7b, the working surface that faces and is in contact with the semi-solid material portion 1 as it rolls next to working area 7b consists of rear surface 7bR and upper surface 7bU. Rear surface 7bR extends upwards from the edge of constant contour rounding bar 2 that is positioned next to conveyor belt 5 and upper surface 7bU extends inwards from the edge of rounding bar 2 that is cantilevered above conveyer belt 5. Rear surface 7bR and upper surface 7bU curve towards each other until these two curved surfaces meet with a smooth transition. In section view, as shown in Figure 2, rear surface 7bR and upper surface 7bU define a bounded curve between the bottom edge and a side edge of rounding bar 2. Like many rounding bars in use today, the shape defined by rear surface 7bR and upper surface 7bU has a constant contour, meaning that the profile shape of surface along the length of working area 7b is constant and consistent from entry area 7a to exit area 7c. As seen in Figure 2, semi-solid material portion 1 is partially contained within the area bounded by the continuous contour of the rounding bar rounding area 7b and the surface of moving conveyor belt 5 so that semi-solid material portion 1 is worked through forces of compression, rolling, and deformation so as to produce a rounded shape from the cylinder-shaped semi-solid material portion that was deposited on conveyor belt 5. This combination of forces acting on the semi-solid material portion occurs because of the motion having combined induced velocity vectors created by the contact of the semi-solid material portion 1 with upper surface 7bU of the continuous contour rounding bar 2, rear surface 7bR of the continuous contour rounding bar 2 along the rounding area 7b, and the moving conveyor belt 5 that pushes the semi-solid material portion 1 in the direction of travel 5a. This contact creates the velocity vectors along the angle which imparts rotation around axis of rotation 8a. This rolling movement will then tend to impart a rounding effect on parts of the semisolid material portion 1.

When the profile shape of rounding bar working area 7b is consistent or with a very gradual taper, there is very little or no change in the axis of rotation, so that after rolling the length of working area 7b, there can still be triple point blemishes and un-rounded surfaces that remained in a non-contact area. A problem with axis of rotation 8a being constant or without significant change is that after a few revolutions of semi-solid material portion 1, added revolutions have a lesser effect until eventually they will no longer improve the rounded-ness of semi-solid material portion 1. This constant or near-constant rotational axis means that the locations on semi-solid material portion 1 associated with non- contact area 3n and triple point blemish 3p do not change, as it rolls along working area 7b, as shown in Figure 2, and if a sharp edge or corner of the original portioned cylinder happens to be in non-contact area 3n it does not get rounded.

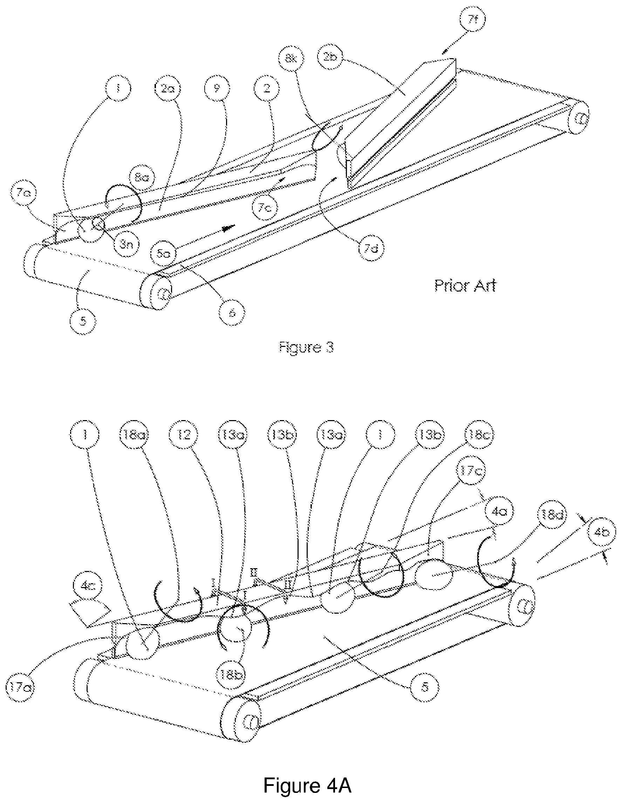

Figure 3 shows a prior art inline rounding machine that attempts to address the forming of triple point blemish 3p and the absence of work done to non-contact area 3n. The machine shown in Figure 3 employs rounding bar 2a arranged in series with rounding bar 2b. This is like the conical rounding machines that use sections of rounding bar arranged in series. Semi-solid material portion 1 is deposited on conveyor belt 5 which is moving in direction of travel 5a. Semi-solid material portion 1 is aligned with entry area 7a which is where it impacts rounding bar 2a. Forces acting upon it from rounding bar 2a and moving conveyor belt 5 initiate rolling along axis of rotation 8a, which continues to be the axis of rotation as it rolls along the constant contour of working area 7b. Semi-solid material portion eventually leaves contact with rounding bar 2a after leaving exit area 7c, and conveyor belt 5 carries it forward until it impacts entry area 7d on rounding bar 2b. Upon impacting rounding bar 2b, forces acting on semi-solid material portion 1 restore a rolling movement, this time along axis of rotation 8k, which will be a different axis of rotation since rounding bar 2b is oriented with a deflection angle opposite to that of rounding bar 2a. Like with the separated sections of a conical rounding machine, random factors associated with this method can introduce inconsistencies resulting in non-uniform results, and like with the machines with separated sections this adds to the overall length of the path travelled on the rounding device and/or reduces the length of the working areas of the rounding bars (if shorter rounding bars are used to offset the extra overall length of the device added by using a plurality of rounding bars in series).

Even though the arrangement shown in Figure 3 can introduce a change in the axis of rotation from 8a to 8k, this is only one random change in the axis of rotation. All along the working area of each rounding bar, the semi-solid material portion is rolled with a constant or near-constant axis of rotation and in addition to triple point blemish 3p and not working non-contact area 3n, if the size of the semi-solid material portion even slightly overflows the open cross-sectional area, prolonged rotation on substantially one axis along the working area can also result in the formation of creases in the surface of the semi-solid material portion caused by continuous compressed contact with edge 9 of rounding bars 2a and 2b.

In addition, rounding machines is use today lack versatility to be easily adapted for a broader range of materials and portion sizes. Today, it can be desirable for a rounding machine to be able to produce a variety of products and the semi-solid materials used for each product can have different properties, including, by way of example, but not limited to: different weights or densities, different sizes, the Newtonian characteristics of the material, and different viscosities and stiffness. One rounding bar may not be suited for all such applications and it can be time consuming to change the rounding bar each and every time a different material is being processed.

To perform correctly, rounding bars need to be matched to the needs or constraints of the semi-solid material portions being rounded. This includes the size of rounding bar which should be matched to the size of the portion as well as viscosity and roundability of the material. Very stiff material can require more work added to it during rounding whereas a soft material can require much less work to deform it and produce adequate rounding. Roundability is a complex term influenced by multiple material characteristics and can be described as how the material reacts to rounding and working forces. These characteristics can include viscosity, the Newtonian nature of the material, and other material characteristics that make the material more or less responsive to the rounding and working forces. As a general rule softer materials are easier to round or respond faster to rounding forces than stiff materials and can therefore be said to have greater roundability. However, stiffness is only one measure of roundability. Generally, the highest roundability, being the degree of responsiveness to rounding or working forces in semi-solid materials can be found in soft, Newtonian materials, which react very quickly and easily to rounding and working forces. Stiffer, non- Newtonian materials require greater application of rounding and working forces to achieve the same effects. Stiff non-Newtonian materials require the greatest amount of force to achieve a result. Additionally, and especially with non-Newtonian semi-solid materials, the amount of work may be varied by the speed at which the forces are applied, so a different working profile may be required for non-Newtonian materials from that required for Newtonian materials. While there can be exceptions, with Newtonian materials, deformation is typically in proportion to the work or deforming energy put into it. If the material has good cohesion and easily deforms then it could be said to have good roundability.

As stated herein, roundability, as defined in this disclosure, is determined by multiple material characteristics, and is also affected by how these characteristics interact with each other to determine how the material reacts to rounding and working forces. Beyond material characteristics, there are also other variables that affect roundabilty. Some materials are only lightly mixed, and when the materials do not have a strong or developed cohesive bond, if too much work is performed or too much of a deformation force is applied then these materials can crack, fracture, or do both, and such materials can be considered to have a low roundability, since they do not respond easily to rounding forces. Conversely, some materials are more significantly mixed or mixed to such an extent that they show an exponential resistance to deformation caused by applying deformation stresses to them. Such materials can have a roundability that is less than that of a soft and cohesive Newtonian semisolid material, but more than a brittle or fragile material portion. An example is bread or roll dough. When it is being worked upon it first gets stiffer or resists further work. The faster it is worked or deformed the more the dough resists this addition of work by stiffening up, but when the material is relaxed and no longer subjected to work it will soften up, This is behaviour that is typical of a non-Newtonian fluid. These differences in material properties and roundability, all influence the shape, contour, size and like variables of the contour or profile that the rounding bar needs, and current rounding bars are not capable of being adjusted to suit the material to be formed.

As set out above, it would be beneficial to reduce the times that a rounding bar must be changed by providing a rounding bar that is more easily adjustable to suit different material properties, or that can be adjusted to accommodate different portion sizes. Using the rounding of pizza dough portions as a non-limiting example, the facility or the production line where the pizza dough portions are made should ideally be capable of producing pizza dough portions of varying sizes. For instance, six inch diameter thin crust pizza rounds compared to fourteen inch diameter thick crust round portions all differ in weight or dough mass and so their diameter will change with pizza size and thickness. Therefore the rounding bar contour size will need to be matched to the size of the pizza dough portion. Changing the rounding bar on the rounding machine can be time consuming and extra investment is required to purchase different rounding bars for each portion size. Different materials for the pizza dough are often also used, whereby different material properties add further variables, for example whole wheat dough versus white dough, or other speciality doughs. No one setting or simple adjustment of contoured rounding bar angle to the moving conveyor belt will suit all products. Currently these variables are addressed by removing the rounding bar and replacing it with a rounding bar with a different profile which might be larger to accommodate a larger sized portion, or with a different contour shape to change how the material is worked, but since it is difficult to keep an inventory of all of the possible shapes that are needed for different materials and different sizes this usually results in compromises if the optimal contour shape and size is not available to match the rounding bar to the desired application.

Thus while inline rounding machines in use today do provide some advantages over conical and cylindrical rounding machines, they still share some of the same deficiencies with respect to the formation of three point blemishes 3p, non-worked areas caused by the non-contact area 3n, and creases caused by extended contact of one area of the material with edge 9. For arrangements that employ a plurality of rounding bars in series, there remain inconsistencies in the quality and character of products arising from uncontrolled changes in the axis of rotation, as well as spatial issues with extended length (or reduced working area if shorter rounding bars are employed). Further, a solution that reduces the instances when changing the rounding bar is needed so that the rounding machine can use the same rounding bar with materials having different properties and sizes.

### Summary

According to the invention a rounding bar as defined in claim 1 is provided. An improved rounding device is provided comprising a belt conveyor and a rounding bar. The belt conveyor has a conveyor belt that establishes a direction of travel. The rounding bar is attached to a frame and is held above the belt conveyor at an angle of deflection relative to the direction of travel. The rounding bar has an entry area located at one end and an exit area located at an opposite end, with a working area that extends between the entry area and the exit area. The working area has a variable contour, meaning that along its length between the entry area to the exit area, the working area has a change in contour that causes a semi-solid material portion that is rolling about a first axis of rotation to roll about a second axis of rotation when traveling within the working area. In an exemplary embodiment the second axis of rotation varies from the first axis of rotation to an extent that a non-contact area of the semi-solid material portion that is associated with the first axis of rotation comes into contact with at least one of the rounding bar and the conveyor belt when the semi-solid material portion is re-oriented to roll about the second axis of rotation.

The variable contour defines at least one relaxation area spanning between two compression areas within the working area. That is, the variable contour of the rounding bar comprises more than one change in contour curvature along the working area whereby the semi-solid material rolls through at least two substantial changes in its axis of rotation along the working area in the course of the semi-solid material portion rolling from the entry area to the exit area. For example, when the linear profile along the working area is in the shape of a wave pattern, there is a change in contour curvature every time there is a transition between the convex curvature of the inverted peak and the convex curvature of the inverted trough. The changes in the axis of rotation result in improved rounding by ensuring that no surface areas escape contact with at least one of the rounding bar or the conveyor belt for at least part of the time that the semi-solid material portion is rolling along the working area. That is, there are no surface areas that remain in the triple point blemish area or the non- contact area for the whole time that the semi-solid material portion is rolling against the working area. The changes in the contour can be defined by changes in at least one of radius, arc, long chord length, curvature, concavity, convexity, degree of curvature, points of tangency, points of reversal in curvature, lip height, roof length, wall height, tapering, bearing distance, and pitch. These variables include dimensions relating to the geometry of the cross-sectional profile and the open area that it defines within the working area. For rounding, the contoured cross- section profile is defined by a curved surface and the radius is the radius of the curved shape. The contour can comprise a complex curve with more than one radius defining its shape, with each radius associated with a different arc that defines a portion of the curved profile that is associated with the working surface. That is, the arc defines a portion of the curved surface that is defined by a particular radius. The long chord length is the distance between the bottom edge of the rounding bar to edge 9 (as shown in Figure 3). When the long chord length is taken as the x-axis for the curved profile shape, the point of reversal is the point on the curve when the slope switches from positive to negative and the reversal line is a line that intersects the reversal point and that is perpendicular to the long chord length. The complex curve need not be entirely concave, and the curvature of the contours profile can include dips and changes between being concave and convex. A convex dip in the roof surface can help to hold the semi-solid material portion against the rounding bar and prevent the semi-solid material portion from being squeezed out, away from the back wall. Accordingly, concavity and convexity are characteristics of the contoured shape and the degree to which the surface is concave or convex changes how the semi-solid material portion is worked. Points of tangency are the location of points where a surface with one curvature tangentially joins another surface. This could be two curves joining or a curve meeting a straight line. The curvature of the contoured shape can be continuously changing such that every point on the contour is a point of tangency. The lip height is the distance between edge 9 and the top surface of the rounding bar. The roof length is the length of the roof portion of the curve that extends from the back portion or wall to edge 9. The wall height is the vertical height of the back portion or wall, as measured from the bottom edge of the rounding bar or the surface of the conveyor belt, to the top surface.

Other variables relate to the varying shape of the working area rounding surface along the linear length from the entry area to the exit area. That is, tapering relates to the distance along this length for transitioning from one shape to another shape, with longer tapering distances associated with smoother shapes and shorter tapering distances being indicative of more abrupt transitions. With the improved rounding bar, even smoothly shaped tapers have slopes that promote substantial changes in the axis of rotation and/or that allow a plurality in changes in the contour curvature to promote more rotations and more even rounding over the whole of surface of the semi-solid material portion over the course of a single rounding bar. That is, rounding bars with only gradual and smooth tapers may not cause the degree of changes in the axis of rotation that are necessary to ensure that all of the surfaces of the material portion are worked and rounded by being in contact with the rounding bar or the conveyor belt over the course of travelling along a single working area of a single rounding bar. For instance, in the exemplary embodiment a non-limiting example of a typical change in the angle of the axis of rotation can be of or about greater than two degrees, more typically of or about five or greater degrees in the change of the angle is realized. The substantial change in the axis of rotation facilitates the change in the axis of rotation such that the unworked areas from the first axis of rotation are worked upon when rotating about the second axis of rotation such that no area of the material portion is left unworked. Similarly, blemished areas or areas showing signs of blemishing on the first axis of rotation are further moved in such a way that they are more likely to be worked or reworked. The overall result being over the course of the working area all of the surface areas of the semi-solid material portion are worked by coming into contact with the rounding bar or the conveyor belt. Another example of a variable along the length of the working area is pitch, meaning the distance between the repeat of a segment type as will be explained in more detail later in this specification. The size of the open area defined by the contour can also change along the linear length. Some semi-solid material portions require the application of more work initially, nearer to the entry area, so the open cross sectional area can be made smaller nearer to the front end of the rounding bar (with shorter internal portion heights associated with deeper inverted wave amplitudes) and become progressively larger towards the exit area (with taller internal portion heights associated with shallower inverted wave amplitudes).

The rounding device can comprise a supporting structure for the rounding bar that can be adjusted to hold the rounding bar at different angles of deflection and/or different angles in inclination. The support structure can be coupled to the rounding bar and the frame. Such adjustments to the position and orientation of the rounding bar can reduce the number of times that a rounding bar needs to be replaced to accommodate materials with different properties or of different size, there can still be times when the rounding bar is removed and replaced with another rounding bar. Accordingly, the coupling mechanism is one that allows easy adjustment without special tools, and easy removal of the rounding bar for cleaning, maintenance on the conveyor and for changing to a different rounding bar. In some embodiments the rounding device can further comprise at least one collision rod supported from the frame and held next to the rounding bar in a location where it is impacted by the semi-solid material portion as it travels along the working area. In other embodiments the rounding device can employ more than one rounding bar with the plurality of rounding bars arranged in series or in parallel. When in series the rounding bars act as a single lane with the semi-solid material being transferred from one rounding bar to the next rounding bar in the series arrangement. The first rounding bar in a series arrangement is held at a first angle of deflection and the second rounding bar is held at a second angle of deflection which is opposed to the first angle of deflection. When the rounding bars have the same length, each rounding bar occupies the same width of the conveyor belt, and this increases the spatial efficiency of such an arrangement on a conveyor belt. It also helps when the series arrangement is combined with a parallel arrangement. When a plurality of rounding bars is arranged in parallel it is also spatially efficient for the parallel rounding bars to share substantially the same angle of deflection.

A method is provided for rounding semi-solid material portions. The method comprises the steps of receiving a semi-solid material portion onto an entry area of a rounding bar; rolling the semisolid material portion from the entry area to a working area of the rounding bar; rounding the semi-solid material portion into a rounded shape by rotating about a first axis of rotation in the working area of the rounding bar; and rotating the semi-solid material portion about a second axis of rotation after encountering a change in contour within the working area. In preferred methods, rolling the semi-solid material to rotate about the second axis of rotation, rolls an area of the semi-solid material portion that was a non-contact area when the semi-solid material portion was rotating about the first axis of rotation, to an orientation where it is in contact with at least one of the rounding bar and the conveyor belt.

The step of rounding the semi-solid material portion comprises first compressing the semi-solid material portion, then relaxing forces acting on the semi-solid material portion, and then compressing the semi-solid material portion at least one more time within the working area of a single rounding bar. Preferred methods further comprise rolling the semi-solid material portion through a plurality of changes in its axis of rotation while rolling along the working area of the rounding bar. By controlling the degree of rotation at each change in contour and by causing more changes in rotation along the working length, the improved method is better able to reduce blemishes and un- worked areas by ensuring that all surface areas spend at least some time in contact with at least one of said rounding bar and the conveyor belt.

To add more changes in the orientation of the semi-solid material portion the method can further comprise further influencing a change in the axis of rotation by impacting the semi-solid material portion against a collision rod when the semi-solid material portion is rolling along the working area of the rounding bar.

A rounding bar is provided that comprises an entry area at one end, an exit area at an opposite end, and a working area that extends between the entry area and the exit area. The working area has a variable contour with a change in contour that causes a semi-solid material portion rolling about a first axis of rotation to roll about a second axis of rotation when traveling within the working area.

The variable contour of the rounding bar comprises more than one change in contour curvature along the working area such that the semi-solid material rolls through at least two changes in the axis of rotation along the working area of the rounding bar.

The variable contour of the rounding bar can change contour in both the shape of the curve that defines cross sectional area and the shape of the profile of the working area longitudinally along the length of the working area from the entry area to the exit area. The longitudinal profile can have a regular recurring pattern with a constant pitch between features along this length or it can have a variable pitch that changes the length of at least some of the different segments that make up the working area. For example, the first rounding segment adjacent the entry area can have a linear length that is longer than that of a last rounding segment that is adjacent the exit area. In some embodiments the plurality of segments can have a wave pattern when viewed looking towards a rear surface of the rounding area. In other embodiments between at least two rounding segments there is a steep change in the variable contour that makes the open cross section area larger, abruptly relaxing compression forces acting on the semi-solid material portion and resulting in a substantial change in the axis of rotation of the semi-solid material portion.

### Brief Description of the Figures

Figures 1 through 3 illustrate the prior art to better illustrate the problems with rounding machines currently in use, and to better show the differences between the prior art and the improved rounding machine and rounding bar that are the subject of this disclosure. Exemplary embodiments of the improved rounding bar and rounding device are explained in greater detail and in relation to the method by way of Figures 4A through 8.
Figure 1 shows an isometric drawing of a typical prior art rounding device.
Figure 2 shows an isometric view of a cut away section of a prior art rounding bar.
Figure 3 shows an isometric view of another prior art rounding device having a single lane with two rounding bars arranged in series.
Figure 4A shows an isometric view of an exemplary embodiment of an improved rounding device with a variable contour rounding bar.
Figures 4B and 4C shows cross sectional views along section lines I-I and II-II respectively of the variable contour rounding bar of Figure 4A.
Figure 5 shows an isometric view of another exemplary embodiment of an improved rounding device with the addition of rigidly mounted collision rods.
Figure 6 shows an isometric view of yet another exemplary embodiment of an improved rounding device with a variable contour rounding bar having an alternative profile.
Figure 7 shows an isometric view of a further exemplary embodiment of a rounding device with four variable contour rounding bars, having two parallel lanes, each with two variable contour rounding bars arranged in series.
Figure 8 shows an isometric view of an embodiment of a variable contour rounder bar with means for adjustment for adaptation to handle materials with different properties or of different size.

### Detailed Description

Reference is now made in detail to the present preferred embodiments, examples of which are illustrated in the accompanying drawings. Whenever possible, the same reference numerals are used throughout the drawings to refer to the same parts, and if the parts are the same and indicated by the same reference numeral, for brevity such parts may not be re-introduced and described with respect to each drawing. If the parts are not the same, but similar in function, like reference numerals are used.

The following detailed description represents embodiments that are intended to provide an overview or framework for understanding the nature and character of the claims. The accompanying drawings are included to provide further understanding of the claims and constitute part of the specification. Accordingly, the detailed descriptions and drawings are non-limiting to the scope of what is claimed, and are intended to illustrate and explain the principles and operations of these embodiments, as claimed.

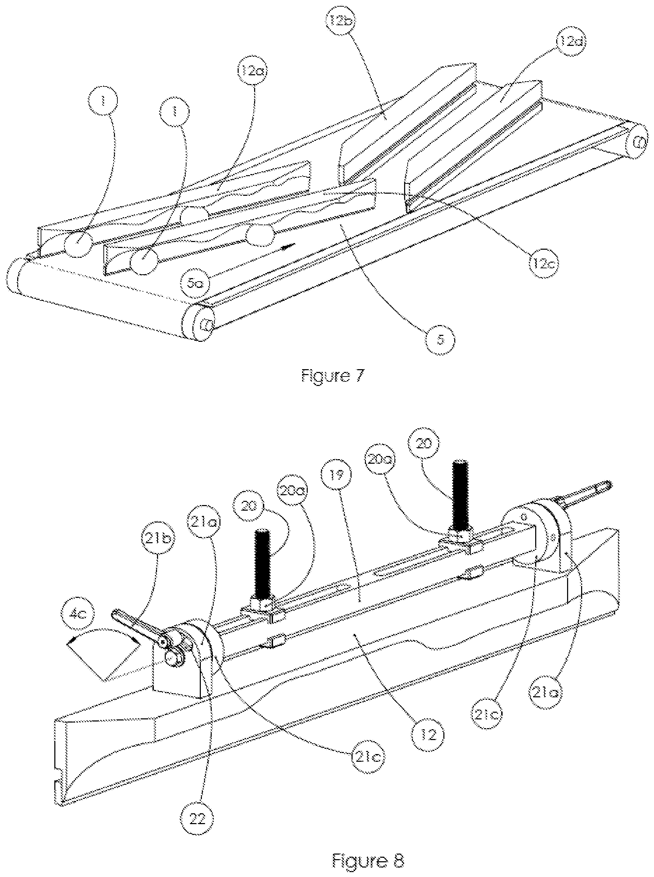

Figure 4A shows an isometric view of an exemplary embodiment of an improved rounding machine. Rounding bar 12 has an elongated shape with a longitudinal axis that is oriented diagonally across the path of conveyor belt 5 with an angle of deflection 4a that is measured in the plane defined by conveyor belt 5 and is the angle of the longitudinal axis of rounding bar 12 relative to the conveyor belt's direction of travel. Tilt angle 4b is the angle of conveyor belt 5 relative to the horizontal plane. Inline rounding machines currently in use are not known to have an adjustable tilt angle. An adjustable tilt angle makes the improved rounding machine more adaptable. For example, tilt angle 4b can be adjusted to tilt the conveyor belt up to offset drops in the production line caused by cascading product flow. Angle of inclination 4c is measured in a plane perpendicular to the surface of conveyor belt 5 and indicates the inclination of rounding bar 12 from a perpendicular orientation relative to conveyor belt 5. That is, the angle of inclination measures the angle of rotation of rounding bar 12 around an axis parallel to the longitudinal axis of rounding bar 12. The angle of inclination is discussed in more detail with reference to Figure 8.

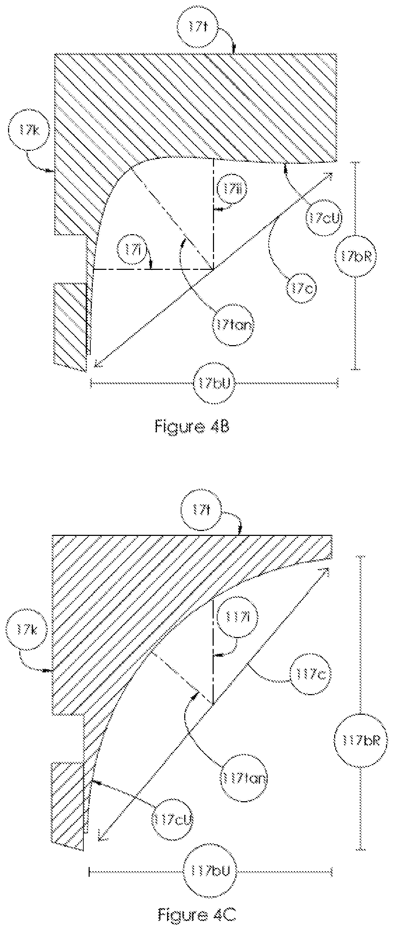

Rounding bar 12 has an entry area 17a and an exit area 17c, and a working area which runs the length of rounding bar 12 there between. As shown, the working area has a variable or non-consistent contour or profile that comprises compression areas 13a and relaxation areas 13b. In this embodiment these variations in contour along the length of rounding bar 12 present an inverted wave pattern, with the inverted troughs of the waves being the high points and the inverted peaks being the low points. The inverted peaks are associated with compression areas 13a because by projecting downwards from the top of rounder bar 12, they make a smaller cross-sectional area through which semi-solid material portions 1 must pass as they roll along the rounding surface of the working area. Inverted troughs 13b are associated with relaxation areas 13b because they make a larger cross-sectional area for the semi-solid material portions, which imparts a reduced compression force as it passes through relaxation areas 13b. Section views I-I and II-II help to illustrate the different shapes associated with compression areas 13a and relaxations areas 13b, as shown in respective Figures 4B and 4C, which each show a contoured profile for a different section of the rounding bar, comprising back outer portion 17k and roof outer portion 17t. In comparing the open areas in these two cross-sections it is clear that compression areas 13a shown in Figure 4B present a smaller open area for imparting higher compression forces when semi-solid material portions 1 pass through, compared to the relatively larger open area associated with relaxation area 13b shown in Figure 4C. Unlike rounding bars that are currently in use, by using a variable contour like in the examples of Figures 4A through 8, semi-solid material portions are subjected to a greater degree of change in the axis of rotation. In addition to a greater degree of change in the axis of rotation, the number of substantial changes in the axis of rotation can be greater, as determined by the number of changes in the contour. Instead of relying upon lesser changes in the axis of rotation that might not result in the whole surface area being worked, or random changes in the axis of rotation by transferring the semi-solid material portions from one rounder bar to another rounder bar, which also adds to the required length for an inline rounding machine, a plurality of changes in the axis of rotation can be achieved within the working area of a single rounding bar. Also, because the semi-solid material remains in contact with the working surface as it rolls along its length, the changes in the axis of rotation can be more controlled, removing randomness from the process, which improves consistency in the product quality.

For example, compression area 13a shown in cross-section I-I in Figure 4B has a contour that is defined by curved surface 17cU which has certain dimensions such as internal portion height 17bR, which is the vertical distance between the bottom of rounder bar 12 to the point where curved surface 17cU meets edge 9 (referenced in relation to Figure 3), and internal depth of contour 17bU which is the horizontal distance from edge 9 to where curved surface 17cU meets the bottom edge of back portion 17k. Major chord length 17c spans between the two ends of curved surface 17cU. The contour of curved surface 17cU is defined in part by reversal line 17tan and radii 17i and 17ii. In this example, radii 17i and 17ii are unequal radii to the left and right of the point of reversal respectively. This makes the contour of this section a complex or compound curve. In this example, radius 17ii is shorter than radius 17i, indicative of a general flattening of the curve so as to exert a varying compressive force vector during movement through this area. The lip height is the difference between the height of back outer portion 17k and internal portion height 17bR.

Similarly, relaxation area 13b shown in cross-section II-II in Figure 4C has a contour which has certain dimensions such as internal portion height 1 17bR, which is the vertical distance between the bottom edge of rounder bar 12 to the point where the curved surface meets edge 9, and the internal depth of the contour which is the horizontal distance 1 17bU from edge 9 to where the curved surface meets the bottom edge of back portion 17k. Major chord length 1 17c spans between the two ends of the curved surface. The shape of the curved surface is defined in part by reversal line 1 17tan and radius of curvature 1 17i, which is consistent throughout the curve. Reversal line 1 17tan is shorter than reversal line 17tan, indicating a shallower curve, with the major chord length 1 17c being longer, compared to major chord length 17c of Figure 4B, which is characteristic of a larger open area. The curved surface of Figure 4C defines a larger open area compared to curved surface 17cU of Figure 4B, which is consistent with the relaxation of forces imparted in relaxation areas 13b as described with respect to the embodiment Figure 4A.

The contours shown in Figures 4B and 4C are illustrative examples, but other shapes are possible and can be made to exert different forces, since different semi-solid material portions can have differences in workability and other properties so that better rounding results can be achieved with different shapes. Accordingly, all of the dimensions that define the shape of the curved surface are variables that can be changed in different embodiments to achieve results more suited to the material being worked. In addition to the dimensions in Figures 4B and 4C, other variables can include, without limitation, curvature, concavity, convexity, degree of curvature, points of tangency, points of reversal, lip height, roof length, wall height, degree of tapering, bearing distance, pitch, and like variables of the contour or profile which can be varied to create the desired rounding or working forces. The illustrated contours are described as being associated with the application of a compressive force and a relaxation of forces, but the function of these contours depends upon the contours that are in the adjoining segment. For example the contour in Figure 4B is described as being one that is associated with a compression area, but if the previous segment were to have an even smaller open cross-section, then the contour shown in Figure 4B could act to relax the compression that was applied in the previous segment. What is common is that for the improved rounding device and rounding bar, within the working area there are changes in the contours so that there is at least one change that causes the semi-solid material portion to substantially change its axis of rotation at least once within the rounding area and so that over the course of travelling along the working area, substantially all of the material surfaces are rounded or worked.

It should also be noted that along the length of rounding bar 12, the variable contours within the working area can have heights, lengths and depths that can change as well as the cross-sectional curvature in each segment of the working area. By way of example, because the amount of compression needed to round a material can change as the material is worked, the cross-sectional area of compression areas 13a can change along the length of the working area. That is, the degree of compression can be changed by changing the height of the inverted peaks and troughs along the length of the working area. As a further example, because less work may be needed later in the rounding process, it can be beneficial to decrease the length of compression areas 13a as semi-solid material portion 1 progresses along rounding bar 12, with this shortening of the length of the compression area allowing more substantial changes in the axis of rotation over a given length of working area. With a recurring wave pattern the spacing between successive peaks or troughs can be defined as the pitch, with the pitch being the distance between where a feature of the contour repeats, however, this distance can be varied, so that some embodiments can employ a constant pitch and other embodiments can employ a variable pitch. In one example of variable pitch, the lengths of compression segments are progressively reduced over the length of the working area. Increasing the number of changes in the axis of rotation can be desirable to reduce the magnitude of triple point blemishes 3p, the effect of areas of non-contact 3n and creases that can be caused by the same areas being in contact with the outer edge of rounding bar 12.

As can be seen in Figure 4A a plurality of semi-solid material portions 1 are shown at different positions, rolling against variable contour rounding bar 12. When semi-solid material portions 1 encounter a change in the shape of the contour, the contour is shaped to sufficiently change the forces acting on them to cause them to roll to a substantially different axis of rotation from 18a to 18b to 18c and finally to 18d. There are three changes in the axis of rotation in this illustrated example, but variable contour profiles can be made to cause any number of changes in the axis of rotation that can be practically managed by changes in the contour of the working surface within the length of the working area.

Rounding bar 12 can also be made to be easily changed on a particular device to suit the desired dough or semi-solid material and the rounding to be performed, for example, a particular varied contour for tortilla portion rounding can be different from a varied contour for pizza dough rounding.

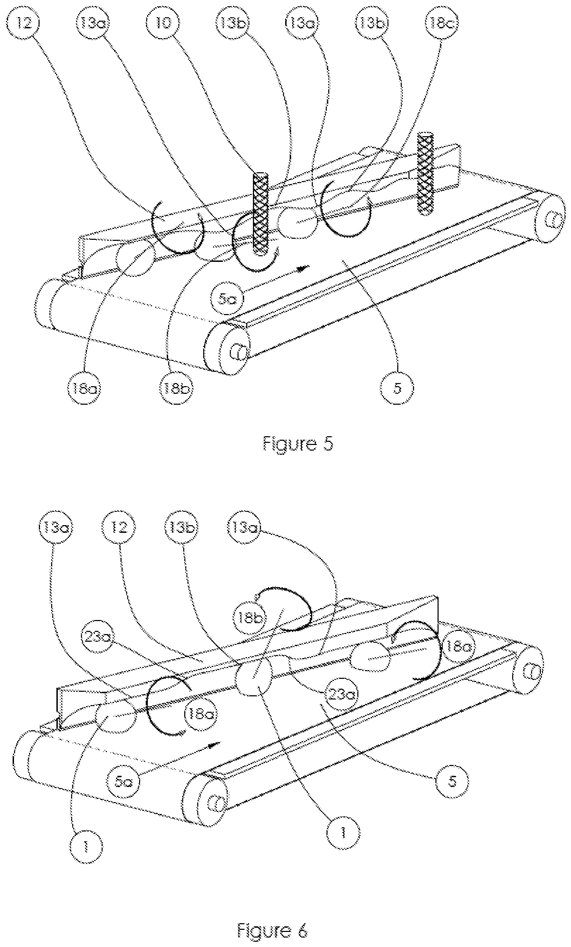

Figure 5 shows an isometric view of another exemplary embodiment of the improved rounding machine with the additional feature of collision rods 10 that are rigidly mounted to a supporting frame (not shown), which can be the same frame that supports rounding bar 12. Collision rods 10 are held above conveyor belt 5 so as to not interfere with movement of conveyor belt 5 in direction of travel 5a. The collision rods 10 are positioned so that they are in the path of the semi-solid material portion as it rolls along rounder bar 12. The size of the semisolid material portion determines how much of it protrudes from the edge of rounding bar 12. In some embodiments it is desirable for collision rods 10 to be placed next to a significantly open area of a rounding contour, such as the inverted trough area associated with relaxation area 13b. In these areas, the relaxation of the compressive forces can allow some semi-solid materials to be released momentarily to facilitate a change in rotation, and/or some spin to the top of the semi-solid material portion, or some backwards rotation to more significantly alter axis of rotation 18a to axis of rotation 18b. Placing collision rod 10 next to such an open area as 13b can increase the rate of change of axis of rotation 18b by imparting another directional force onto the semi-solid material portion. Collision rods 10 can thus be used to add or increase the change in the axis of rotation of the semi-solid portion.

It can also be the case that the length of the open area associated with relaxation area 13b is better suited to the properties of some semi-solid materials, but too long or utilize too much of the length of the working area of rounding bar 12 for other semi-solid materials. In this case the addition of collision rod 10 increases the rate of change in axis of rotation 18c so that the same rounding bar can be used with different materials that have different properties, or collision rod 10 can be used to enable the rounding bar to be made with a reduced length of relaxation area 13b thereby increasing its efficiency and reducing the overall length of conveyor 5 and rounding bar 12 or to enable the rounding bar to be made with shorter relaxation areas and longer compression areas.

Figure 6 shows an isometric view of yet another exemplary embodiment of an improved rounding machine. Rounding bar 12 has a non-continuous contour with steep ramps 23a that lead to an open area made within the working area. Rounding bar 12 has compression areas 13a on either side of the open area and ramps 23a provide a rapid expansion from first compression area 13a to relaxation area 13b which is open to the side, and a rapid contraction to second compression area 13a. In linear profile, the working area has a more square-ish waveform compared to the embodiments of Figure 4A or Figure 5, and this shape changes the rounding forces in a more stepped manner when the semisolid material portion encounters ramp 23a. A rapid expansion opening like this allows for a longer release period where the semi-solid material portion 1 is able to have a greater change in axis of rotation before again being put into a lower or tighter contour or profile that is associated with second compression area 13a, within which greater forming forces are again applied. This greater change in the axis of rotation can occur without the use of a collision rod and can have an advantage over collision rods when the rounding machine is used for different sized semisolid material portions. When different sizes of semi-solid material portions are rounded by a machine with collision rods it can be necessary to adjust the spacing of the collision rod from the rounding bar to achieve the desired effect. Such adjustments are not necessary with the embodiment shown in Figure 6. Each embodiment has its advantages and disadvantages, since some materials require a longer compression area which does not allow the use of an extended open area like in Figure 6, so in some cases using a collision rod can be the preferred arrangement. Accordingly, while not shown, collision rods can be added to the embodiment of Figure 6 to promote more changes in the axis of rotation within the working area.

Ramp 23a is shown with one exemplary shape, but other shapes can be employed. For example, a rounded or sculpted shape can also change the forces exerted on the semi-solid material portion to precipitate a substantial change in the axis of rotation. The shape need not be steep, but in this embodiment a rapid change in slope is desired instead of a shallower and gentler slope. Compression area 13a can also be lengthened to provide a longer time for applying compression forces, or made with a smaller cross-sectional open area to increase the degree of compression, as needed for the required rounding purposes for some semi-solid materials. Also the rounding contour relaxed area 13b can be made with an increased open area to allow for greater rotation or change of axis of rotation during relaxation. As well the contoured surface in the working area can incorporate other changes in shape or curvature so as to avoid having a continuous contour rounding section where a triple point blemish 3p can develop at the convergence of the surface of conveyor belt 5, the back surface of the contour of rounding bar 12 where it meets the conveyor belt, and the axis of rotation.

Figure 7 shows an isometric view of another exemplary embodiment of a rounding machine. In this embodiment there are two "lanes" each with two rounding bars in succession. First rounding bar 12a is oriented in an diagonal angle of left to right, as viewed from the entry area side, and second rounding bar 12b, which is in the same lane as first rounding bar 12a having a reversed angle of deflection, being oriented from right to left. This is repeated in a second lane of rounding bars with rounding bar 12c and 12d. That is, there are two identical lanes comprised of rounding bars 12a and 12b arranged in series with 12a being followed by 12b, and another set comprising rounding bar 12c and 12d arranged in series with 12c being followed by 12d. The two lanes are arranged on conveyor belt 5 in parallel. Each of rounding bars 12a, 12b, 12c and 12d has a working area with a variably contoured surface. It should be noted, that although two lanes are shown, Figure 7 is illustrative of other embodiments that use the improved rounding bar with a single lane or a different number of lanes, or with other arrangements that have rounding bars arranged in series.

In each instance a set of rounding bars are used where the first rounding bar 12a, 12c in each lane is placed at an angle of deflection relative to the direction of travel 5a and these are followed by a second set of rounding bars 12b, 12d each oriented in a respective lane with an opposite direction and angle. This allows for semi-solid material portions 1 to be received and rounded and exit the respective first rounding bar 12a, 12c and be recaptured by the entry area of the respective second reversed set of rounding bars 12b, 12d for subsequent further rounding. The motion imparted by transferring semi-solid material portion from one rounding bar to another rounding bar with a reversed angle of deflection causes the semi-solid material portion to rotate on the second rounding bar in an opposite direction as opposed to the first direction of rotation on the first rounding bar, which can help with the rounding process despite the randomness introduced by being transferred to a second rounding bar. Further, the inconsistencies in rounding caused by the randomness introduced is also offset by the longer working area provided by two rounding bars, which each have a variable contour to effect more changes in the axis of rotation and more working of the semi-solid material portion. Some materials have properties that require more working of the material than can be accomplished on a single rounding bar, and advantageously, a series arrangement can solve this by providing a longer working area.

Figure 8 shows an isometric view of another embodiment of an improved rounding bar which illustrates additional features for adjusting angle of inclination 4c. Mounting bar 19 is part of a supporting structure for holding rounding bar 12 in position above the conveyor belt. Attachment rods 20 and releasable connectors 20a are connected to a frame (not shown) for support. Releasable connectors 20a are shown as screw clamps as a non-limiting example. Mounting bar 19 supports rounding bar 12 through the structure provided by rotating element 12c and rotation block 12a which is described in greater detail below. By unclamping mounting bar 19, rounder bar 12 can be removed for cleaning, or replacement with a new rounding bar or a rounding bar with a different contour profile, for example, when changing the set-up of the rounding machine to be used to produce a different product. The screw clamps can be clamped to rounding bar 19 at different locations so that the position of rounder bar 12 relative to the conveyor belt can also be adjusted. Alternatively, in some instances, rounding bar 12 need not be changed to produce a different product if its orientation can be adjusted to adapt the machine for another semi-solid material by changing the angle of inclination 4c.

By changing the angle of inclination, the shape and size of the working area cross-section is changed. Clamping handle 21 b is operable to loosen the connection between rotation block 21 a and rotating element 21 c so that rounding bar 12 can be rotated around the longitudinal axis of mounting bar 19, within the range of motion permitted by adjustment slot 22. Once rounding bar 12 is oriented at the desired angle of inclination, clamping handle 21 b can be operated to tighten the connection between rotation block 21 a and rotating element 21 c, locking rounding bar 12 in position. Since rotating rounding bar 12 changes the distance of the bottom edge of rounding bar 12 with respect to the conveyor belt, the threaded position of attachment rods can be used to adjust the height of rounding bar 12 with respect to the supporting frame so that the bottom edge of rounding bar 12 is positioned at the designed height with respect to the conveyor belt. Inclination angle 4c is shown with arrows to indicate a range of angles that can be selected.

When it is desired to use one rounding machine to round different sizes of semi-solid material portions, for rounding machines that cannot adjust the angle of inclination, the material portion may be too small to contact all of the contoured surface of the working area, which can be detrimental to rounding. Conversely, if the material portion is too large for the cross-sectional open area of the working area it can be overworked and subjected to unwanted deformation that results in blemishes, or it can overflow the open space and form a more pronounced crease by being rolled against the top edge of the contour. By adjusting the angle of inclination the open cross-sectional area in the working area can be increased by tilting the top outer edge of the rounder bar away from the conveyor belt or decreased by tilting the top outer edge of the rounder bar towards the conveyor belt.

### Description of an Exemplary Method of Operation

Reference is made to the method of operation and use of the exemplary embodiments of the improved rounding machine as described above. Semi-solid material portions are created by separating portions from a bulk semi-solid material through the use of a portioning machine. The semi-solid material portions are fed onto a moving conveyor belt so that once placed onto the moving conveyor belt the semi-solid material portion travels to a rounding bar entry area where it first engages with the rounding bar. The semi-solid material portion rolls from the entry area to a working area which has a variable contour along its length that extends to an opposite end where there is an exit area. The rounding bar is oriented at an angle of deflection which is the angle between the longitudinal axis of the rounding bar and the direction of travel of the conveyor belt, as measured in the plane defined by the conveyor belt. The rounding bar is also set at an angle of inclination relative to a neutral position in which the back outer portion is perpendicular to the conveyor belt. The angle of deflection can be set for example at about between 0 and 45 degrees but most typically at an angle of between about 5 to 20 degrees. In embodiments that provide for adjustment of the angle of inclination, this angle can be set at about between -25 and 45 degrees but typically at an angle of between about 0 to 15 degrees, where a positive change in the angle of inclination rotates the surface of the working area closer toward the conveyor belt. All of these adjustments enable the rounding machine to be more versatile to produce different products that can be made from different semi-solid materials with different material properties. Such adjustments enable the improved rounding machine and associated method to better achieve the desired amount of deformation, rounding, or deformation and rounding.

The method comprises changing the contour in the working area of the rounding bar to cause the semi-solid material portion to roll to a second axis of rotation within the working area. It is the variable contour of the rounding surface of the working area that controls the degree of changes to the orientation of the semi-solid material portion and corresponding changes in the axis or rotation, which result in substantially all of the material portion's surface area being rounded and/or worked. By shaping the rounding bar with different segments with different contours, the method comprises sequentially exerting different forces on the semi-solid material and changing its axis of rotation with each change in contour. While the semi-solid material portion is rolling within one segment, depending upon the contour and the size of the open area, the method comprises subjecting the semi-solid material portion to different working modes, including, without limitation, compression, relaxation, release, and containment.

The method can comprise adjusting the rounding machine to handle a variety of materials, which can have different properties and different portion sizes. This includes adjusting the angle of deflection and adjusting the angle of inclination. When the semi-solid material portion is finally passed out of the exit area, it has undergone a controlled change in its axis of rotation at least once while it was rolling along the working area. The illustrated embodiments of the rounding machine have several changes in the contour that effect several changes in the axis of rotation when a semi-solid material portion rolls against the illustrated examples of improved rounding bars. This process may be modified to incorporate additional changes in contour and angles of rotation based on profile or material variables or profile and material variables to achieve the desired working forces and rounding forces. After exiting it may be further processed by additional rounding or by other devices.

By changing the axis of rotation of the semi-solid material portion in the working area of the rounding bar, the product has both reduced blemishes by limiting the time the material is rolling along any one axis of rotation, and a rounder shape by reducing the time that any one surface of the material is in a non-contact area. By varying the shape of the contour it is also possible for the rounding machine to do more than just rounding. This method improves efficiency, reduces waste, reduces the size of the machine and provides a better finished product compared to current rounding machines.

The method can allow adaptability for rounding different material with different material properties by using different rounding bars with different variable contour profiles. That is, the contour variables can be varied to suit material variables of the semi-solid material portions and the manner in which the variable contour or profile of the rounding bar is varied to impart specific forming and rounding action to suit particular material characteristics. These material characteristics can include for instance, but are certainly not limited to, the degree of viscosity as well as type of viscosity and the Newtonian characteristics of the material engaging the rounding bar. For example, different doughs exhibit different physical characteristics which effect roundability. Thus, as a further non limiting example of how the desired profile can be configured to fit a specifically required or desired set of forces at different points on the rounding bar, a stiff dough typically requires a greater degree of deformation to achieve a more rounded shape so the rounding bar used for this application can have compression areas that are made to cause more deformation, by making the cross sectional area have a shorter internal portion height. That is, it is important to note that if a material is stiffer, it can require more deformation instead of more compressive cycles, so this is another example of how the shape of the variable contoured working area can be tailored for the material properties of the semi-solid material portions that are being rounded. This requirement is based in part on the greater viscous nature of a stiff dough. By comparison a softer or less viscous material will flow more easily and therefore need less deformation so as to deform and round, so the rounding bar can be made with fewer compression areas and the compression areas can be made to cause less deformation, for example by the cross sectional area having a higher internal portion height. These material variables and variables like them are integral in the choosing of shapes and contours of the non-consistent or variable contour or profiles and the variation of the contour along the length of the rounding bar.

Another non-limiting example of a low viscosity material that would require several compression areas would be for a portion of panko bread which is stiff but mixed for a shorter period of time than stiffer doughs such as bagels and some pizza doughs, so that significant deformation is required so as to move the viscous material so that the sharp or non-rounded surfaces of the "as cut" portion can be rounded into round or a spherical shape. By comparison a soft, low viscous material portion such as soft white bread dough can be more easily rounded as in many cases just the rotational contact of the soft white dough against the contour will get it to deform and round in a desirable fashion and into a desirable spherical shape.

Yet another non-limiting example of a material variable that can influence the desired shape of the variable contours for the rounding bar includes the type of fluid characteristics that can play a role in working and rounding. For example, an important variable can be whether or not the semi viscous material is of a Newtonian or non-Newtonian material, as discussed at length above. A non-limiting example of a semi-solid material that exhibits Newtonian Fluid characteristics would be a bagel or pizza dough, where the dough is stiffer due to lower water content than in a soft white bread dough, but with a good degree of mixing such that the dough tends to go from a material that has relatively little tensile strength or bond to where it is better "developed" in the baking/dough sense. When a small amount of the well mixed or developed dough is pulled it will stretch as compared to dough that has received a small degree of mixing and development such as but not limited to dough for scones where the scone dough when pulled on will have little to no stretch and merely tear or crack. The stiffer dough that is developed, in the baking sense, will stretch and will also exhibit a non-Newtonian fluid characteristic, so that when you start to deform the stiffer dough it will stiffen to resist deforming initially and will soften to some degree, or become elastic when the deforming action is stopped. These types of doughs would need a greater degree of compression or deformation so as to first overcome the stiffness resistance to deformation and then an additional degree of deformation required again so as to overcome the Non-Newtonian fluid resistance to rounding, and in the end, provide a rounding effect so as to round the non-round edges of the dough portion. By comparison a muffin dough such as that used to create English muffins is a very soft dough and it is significantly mixed so as to be well developed. When an English muffin dough is worked upon so as to be rounded it is so soft that it is easy to round with very little deformation and the non-Newtonian effect is slight because of the high water content and softness of the dough.

Thus, the improved rounding bar can be shaped with a non- consistent variable profile made suit specific dough characteristics, to not only improve the rounding, but also for working on the dough as needed for a dough's particular material characteristics. The improved rounding machine and rounding bar provide apparatus for a method of tailoring of the non-consistent or varied profile or contour of the rounding bar to suit particular material types and characteristics, including easy release guides and adjustment mechanisms as discussed herein.

While the illustrated embodiments show particular examples, various modifications and alterations may be made to the examples within the scope of the claims and aspects of the different examples may be combined in different ways to achieve further examples. Accordingly, the scope of the claims is to be understood from the entirety of the present disclosure in view of, but not limited to the embodiments illustrated and described herein.

## Claims

1. A rounding bar (12) for transforming non-uniform, non-rounded portions (1) of portioned amounts of semi-solid material into a rounded generally spherical shape, comprising an entry area (17a) at one end, an exit area (17c) at an opposite end, and a working area that extends between said entry area (17a) and said exit area (17c), said working area having a variable contour, and a varying shape of a working area rounding surface along the linear length from the entry area to the exit area, with a change in contour causing, in use, a semi-solid material portion (1) rolling about a first axis of rotation (18a) to roll about a second axis of rotation (18b) when traveling within said working area, **characterized in that** said variable contour defines at least one relaxation area (13b) spanning between two compression areas (13a) within said working area with said relaxation area (13b) having a larger open cross-sectional area than that of each one of said compression areas (13a).

2. The rounding bar of claim 1, wherein between at least two rounding segments (13a, 13b) there is a steep change (23a) in the variable contour that makes the open cross section area larger, abruptly relaxing, in use, compression forces acting on the semi-solid material portion (1) and resulting in a substantial change in the axis of rotation of the semi-solid material portion.

3. The rounding bar of claim 2, wherein the steep change is provided by the rounding bar (12) having a non-continuous contour with steep ramps (23a) that lead to an open area made within the working area.

4. The rounding bar of claim 1, wherein said rounding area comprises a plurality of rounding segments (13a, 13b) linearly spaced along said rounding area with each rounding segment defining a change in contour that causes said semi-solid material portion to roll to a different axis of rotation.

5. The rounding bar of claim 4, wherein a first rounding segment adjacent said entry area (17a) has a linear length that is longer than that of a last rounding segment that is adjacent said exit area (17c).

6. The rounding bar of claim 1 further comprising a convex dip in a roof surface of said rounding bar.

7. A rounding device comprising:
a belt conveyor having a conveyor belt (5) moving in a direction of travel (5a); and
a rounding bar (12) according to any one of claims 1 to 6 attached to a frame (19) and held above said belt conveyor at an angle of deflection (4a) relative to said direction of travel (5a).

8. The rounding device of claim of 7, wherein said second axis of rotation (18b) varies from said first axis of rotation (18a) by two or more degrees, preferably five or more degrees to an extent that a non-contact area (3n) of said semi-solid portion that was not in contact with said rounding bar (12) or said conveyor belt (5) when said semi-solid material portion (1) was rotating about said first axis of rotation, is oriented to be in contact with at least one of said rounding bar and said conveyor belt when said semi-solid material portion is rotating about said second axis of rotation.

9. The rounding device of claim of 7, further comprising at least one collision rod (10) supported from said frame and held next to said rounding bar (12) in a location where it is impacted by said semi-solid material portion (1) as it travels along said working area.

10. A method of rounding semi-solid material portions for transforming non-uniform, non-rounded portions (1) of portioned amounts of semi-solid material into a rounded generally spherical shape, comprising the method steps of: receiving a semi-solid material portion onto an entry area of a rounding bar (12) according to any one of claims 1 to 6;
rolling said semi-solid material portion (1) from said entry area (7a) to a working area of said rounding bar (12);
rounding said semi-solid material portion (1) into a rounded shape by rotating about a first axis of rotation (18a) in said working area of said rounding bar; and
rotating said semi-solid material portion (1) about a second axis of rotation (18b) after encountering a change in contour within said working area.

11. The method of claim 10, wherein rolling said semi-solid material portion to rotate about said second axis of rotation (18b) causes a change in rotation of two or more degrees, preferably five or more degrees, and rolls an area of said semi-solid material portion (1) that was a non-contact area (3n) when rotating about said first axis of rotation (18a), to an orientation where it is in contact with at least one of said rounding bar (12) and a conveyor belt (5).

12. The method of one of claims 10 and 11, wherein within said working area the method step of rounding said semi-solid portion further comprises first compressing said semi-solid material portion, then relaxing forces acting on said semi-solid material portion, and then compressing said semi-solid material portion at least one more time.

13. The method of any one of claims 10 to 12 further comprising rolling said semi-solid material portion through a plurality of changes in its axis of rotation while rolling along said rounding bar, such that all surface areas of said semi-solid material portion spend at least some time in contact with at least one of said rounding bar and a conveyor belt.

14. The methods of any one of claims 10 to 13 further comprising influencing a substantial change in the axis of rotation by impacting said semi-solid material portion against a collision rod (10) when said semi-solid material portion is rolling along said working area of said rounding bar.

## Patentansprüche

1. Rundwirkstange (12) zum Umwandeln von uneinheitlichen, nicht abgerundeten Portionen (1) portionierter Mengen von halbfestem Material in eine abgerundete, allgemein kugelförmige Form, umfassend einen Eintrittsbereich (17a) an einem Ende, einen Austrittsbereich (17c) an einem gegenüberliegenden Ende und einen Arbeitsbereich, der sich zwischen dem Eintrittsbereich (17a) und dem Austrittsbereich (17c) erstreckt, wobei der Arbeitsbereich eine variable Kontur hat sowie eine variierende Form einer Arbeitsbereichrundwirkfläche entlang der linearen Länge von dem Eintrittsbereich zu dem Austrittsbereich, wobei durch eine Konturänderung veranlasst wird, dass im Gebrauch eine halbfeste Materialportion (1), die um eine erste Rotationsachse (18a) rollt, um eine zweite Rotationsachse (18b) rollt, wenn sie sich in dem Arbeitsbereich bewegt, **dadurch gekennzeichnet, dass** die variable Kontur mindestens einen Entspannungsbereich (13b) definiert, der sich zwischen zwei Kompressionsbereichen (13a) in dem Arbeitsbereich erstreckt, wobei der Entspannungsbereich (13b) eine größere offene Querschnittsfläche hat als jeder der Kompressionsbereiche (13a).

2. Rundwirkstange nach Anspruch 1, wobei zwischen mindestens zwei Rundwirksegmenten (13a, 13b) eine steile Veränderung (23a) in der variablen Kontur vorliegt, die die offene Querschnittsfläche vergrößert und im Gebrauch auf die halbfeste Materialportion (1) einwirkende Kompressionskräfte abrupt entspannt und zu einer wesentlichen Änderung der Rotationsachse der halbfesten Materialportion führt.

3. Rundwirkstange nach Anspruch 2, wobei die steile Änderung dadurch bereitgestellt wird, dass die Rundwirkstange (12) eine nicht kontinuierliche Kontur mit steilen Rampen (23a) hat, die zu einem in dem Arbeitsbereich hergestellten offenen Bereich führen.

4. Rundwirkstange nach Anspruch 1, wobei der Rundwirkbereich eine Vielzahl von Rundwirksegmenten (13a, 13b) umfasst, die entlang des Rundwirkbereichs linear beabstandet sind, wobei jedes Rundwirksegment eine Konturänderung definiert, durch die veranlasst wird, dass die halbfeste Materialportion um eine andere Rotationsachse rollt.

5. Rundwirkstange nach Anspruch 4, wobei ein dem Eintrittsbereich (17a) benachbartes erstes Rundwirksegment eine lineare Länge hat, die länger als die eines letzten Rundwirksegments ist, das dem Austrittsbereich (17c) benachbart ist.

6. Rundwirkstange nach Anspruch 1, ferner umfassend eine konvexe Einbuchtung in einer Dachfläche der Rundwirkstange.

7. Rundwirkvorrichtung, umfassend:
einen Bandförderer mit einem Förderband (5), das sich in einer Bewegungsrichtung (5a) bewegt, und
eine Rundwirkstange (12) nach einem der Ansprüche 1 bis 6, die an einem Rahmen (19) angebracht ist und in einem Ablenkungswinkel (4a) bezüglich der Bewegungsrichtung (5a) über dem Bandförderer gehalten wird.

8. Rundwirkvorrichtung nach Anspruch 7, wobei sich die zweite Rotationsachse (18b) um zwei oder mehr Grad, vorzugsweise fünf oder mehr Grad, von der ersten Rotationsachse (18a) unterscheidet, so dass ein Nicht-Kontaktbereich (3n) der halbfesten Portion, der nicht mit der Rundwirkstange (12) oder dem Förderband (5) in Kontakt war, als sich die halbfeste Materialportion (1) um die erste Rotationsachse gedreht hat, so ausgerichtet ist, dass er mit der Rundwirkstange und/oder dem Förderband in Kontakt ist, wenn sich die halbfeste Materialportion um die zweite Rotationsachse dreht.

9. Rundwirkvorrichtung nach Anspruch 7, ferner umfassend mindestens eine Kollisionsstange (10), die an dem Rahmen gestützt ist und neben der Rundwirkstange (12) an einer Stelle gehalten wird, an der die halbfeste Materialportion (1), während sie sich entlang des Arbeitsbereichs bewegt, auf sie auftrifft.

10. Verfahren zum Rundwirken von halbfesten Materialportionen, um uneinheitliche, nicht abgerundete Portionen (1) portionierter Mengen von halbfestem Material in eine abgerundete, allgemein kugelförmige Form umzuwandeln, umfassend die folgenden Verfahrensschritte: Erhalten einer halbfesten Materialportion auf einem Eintrittsbereich einer Rundwirkstange (12) nach einem der Ansprüche 1 bis 6,
Rollen der halbfesten Materialportion (1) von dem Eintrittsbereich (7a) zu einem Arbeitsbereich der Rundwirkstange (12),
Rundwirken der halbfesten Materialportion (1) zu einer abgerundeten Form durch Drehen um eine erste Rotationsachse (18a) in dem Arbeitsbereich der Rundwirkstange, und
Drehen der halbfesten Materialportion (1) um eine zweite Rotationsachse (18b) nach Erfahren einer Konturänderung in dem Arbeitsbereich.

11. Verfahren nach Anspruch 10, wobei durch Rollen der halbfesten Materialportion, so dass sie sich um die zweite Rotationsachse (18b) dreht, eine Rotationsänderung um zwei oder mehr Grad, vorzugsweise fünf oder mehr Grad, veranlasst wird und ein Bereich der halbfesten Materialportion (1), der beim Drehen um die erste Rotationsachse (18a) ein Nicht-Kontaktbereich (3n) war, in eine Ausrichtung gerollt wird, in der er mit der Rundwirkstange (12) und/oder einem Förderband (5) in Kontakt steht.

12. Verfahren nach einem der Ansprüche 10 und 11, wobei der Verfahrensschritt des Rundwirkens der halbfesten Portion in dem Arbeitsbereich ferner zunächst das Komprimieren der halbfesten Materialportion umfasst, wonach Entspannungskräfte auf die halbfeste Materialportion wirken, wonach die halbfeste Materialportion mindestens ein weiteres Mal komprimiert wird.

13. Verfahren nach einem der Ansprüche 10 bis 12, ferner umfassend Rollen der halbfesten Materialportion durch eine Vielzahl von Änderungen ihrer Rotationsachse, während des Rollens entlang der Rundwirkstange, so dass alle Oberflächenbereiche der halbfesten Materialportion mindestens eine gewisse Zeit in Kontakt mit der Rundwirkstange und/oder einem Förderband verbringen.

14. Verfahren nach einem der Ansprüche 10 bis 13, ferner umfassend Beeinflussen einer wesentlichen Änderung der Rotationsachse, indem veranlasst wird, dass die halbfeste Materialportion auf einer Kollisionsstange (10) aufprallt, wenn die halbfeste Materialportion entlang des Arbeitsbereichs der Rundwirkstange rollt.

## Revendications

1. Barre d'arrondissement (12) pour transformer des parties (1) non uniformes non arrondies de quantités fractionnées d'un matériau semi-solide en une forme arrondie généralement sphérique, comprenant une surface d'entrée (17a) à une extrémité, une surface de sortie (17c) à une extrémité opposée, et une surface de travail qui s'étend entre ladite surface d'entrée (17a) et ladite surface de sortie (17c), ladite surface de travail présentant un contour variable, et une forme variable d'une surface d'arrondissement de surface de travail le long de la longueur linéaire entre la surface d'entrée et la surface de sortie, un changement de contour entraînant, en utilisation, une partie (1) de matériau semi-solide roulant autour d'un premier axe de rotation (18a) à rouler autour d'un second axe de rotation (18b) lorsqu'elle se déplace à l'intérieur de ladite surface de travail, **caractérisée en ce que** ledit contour variable définit au moins une surface de relâchement (13b) s'étendant entre deux surfaces de compression (13a) à l'intérieur de ladite surface de travail, ladite surface de relâchement (13b) présentant une surface transversale ouverte supérieure à celle de chacune desdites surfaces de compression (13a).

2. Barre d'arrondissement selon la revendication 1, dans laquelle entre au moins deux segments d'arrondissement (13a, 13b) se produit un changement brusque (23a) dans le contour variable qui agrandit la surface transversale ouverte, relâchant brusquement, en utilisation, les forces de compression agissant sur la partie (1) de matériau semi-solide et résultant en un changement substantiel dans l'axe de rotation de la partie de matériau semi-solide.

3. Barre d'arrondissement selon la revendication 2, dans laquelle le changement brusque est produit par la barre d'arrondissement (12) présentant un contour non continu avec des rampes raides (23a) qui mènent à une surface ouverte produite à l'intérieur de la surface de travail.

4. Barre d'arrondissement selon la revendication 1, dans laquelle ladite surface d'arrondissement comprend une pluralité de segments d'arrondissement (13a, 13b) espacés linéairement le long de ladite surface d'arrondissement, chaque segment d'arrondissement définissant un changement de contour qui amène ladite partie de matériau semi-solide à rouler vers un axe de rotation différent.

5. Barre d'arrondissement selon la revendication 4, dans laquelle un premier segment d'arrondissement adjacent à ladite surface d'entrée (17a) présente une longueur linéaire qui est plus longue que celle d'un dernier segment d'arrondissement qui est adjacent à ladite surface de sortie (17c).

6. Barre d'arrondissement selon la revendication 1, comprenant en outre une entaille convexe dans une surface de toit de ladite barre d'arrondissement.

7. Dispositif d'arrondissement comprenant :
un transporteur à courroie ayant une courroie transporteuse (5) se déplaçant dans une direction de déplacement (5a) ; et
une barre d'arrondissement (12) selon l'une quelconque des revendications 1 à 6 fixée à un cadre (19) et retenue au-dessus de ladite courroie transporteuse à un angle de déviation (4a) par rapport à ladite direction de déplacement (5a) .

8. Dispositif d'arrondissement selon la revendication 7, dans lequel ledit second axe de rotation (18b) varie par rapport audit premier axe de rotation (18a) de deux degrés ou plus, de préférence de cinq degrés ou plus selon un degré selon lequel une surface sans contact (3n) de ladite partie semi-solide qui n'était pas en contact avec ladite barre d'arrondissement (12) ou ladite courroie transporteuse (5) lorsque ladite partie (1) de matériau semi-solide tournait autour dudit premier axe de rotation, est orienté pour être en contact avec au moins l'une de ladite barre d'arrondissement et de ladite courroie transporteuse lorsque ladite partie de matériau semi-solide tourne autour dudit second axe de rotation.

9. Dispositif d'arrondissement selon la revendication 7, comprenant en outre au moins une tige de collision (10) supportée depuis ledit cadre et retenue près de ladite barre d'arrondissement (12) en une position dans laquelle elle est touchée par ladite partie (1) de matériau semi-solide lors de son déplacement le long de ladite surface de travail.

10. Procédé d'arrondissement de parties de matériau semi-solide pour transformer des parties (1) non uniformes non arrondies de quantités fractionnées d'un matériau semi-solide en une forme arrondie généralement sphérique, comprenant les étapes de procédé suivantes : la réception d'une partie de matériau semi-solide sur une surface d'entrée d'une barre d'arrondissement (12) selon l'une quelconque des revendications 1 à 6 ;
le roulement de ladite partie (1) de matériau semi-solide depuis ladite surface d'entrée (7a) vers une surface de travail de ladite barre d'arrondissement (12) ;
l'arrondissement de ladite partie (1) de matériau semi-solide en une forme arrondie par la rotation autour d'un premier axe de rotation (18a) dans ladite surface de travail de ladite barre d'arrondissement ; et
la rotation de ladite partie (1) de matériau semi-solide en une forme arrondie par la rotation autour d'un second axe de rotation (18b) après la rencontre avec un changement de contour à l'intérieur de ladite surface de travail.

11. Procédé selon la revendication 10, dans lequel le roulement de ladite partie de matériau semi-solide autour dudit second axe de rotation (18b) entraîne un changement de rotation de deux degrés ou plus, de préférence de cinq degrés ou plus, et fait rouler une surface de ladite partie (1) de matériau semi-solide qui était une surface sans contact (3n) lorsqu'elle tournait autour dudit premier axe de rotation (18a), dans une orientation dans laquelle elle est en contact avec au moins l'une de ladite barre d'arrondissement (12) et d'une courroie transporteuse (5).

12. Procédé selon l'une des revendications 10 et 11, dans lequel à l'intérieur de ladite surface de travail, l'étape de procédé d'arrondissement de ladite partie semi-solide comprend en outre en premier lieu la compression de ladite partie de matériau semi-solide, puis le relâchement de forces agissant sur ladite partie de matériau semi-solide, puis la compression de ladite partie de matériau semi-solide au moins une fois de plus.

13. Procédé selon l'une quelconque des revendications 10 à 12, comprenant en outre le roulement de ladite partie de matériau semi-solide à travers une pluralité de changements de son axe de rotation tout en roulant le long de ladite barre arrondie, afin que toutes les surfaces de ladite partie de matériau semi-solide soient au moins quelque temps en contact avec au moins l'une de ladite barre d'arrondissement et d'une courroie transporteuse.

14. Procédé selon l'une quelconque des revendications 10 à 13, comprenant en outre l'action d'influencer un changement substantiel dans l'axe de rotation par l'action de faire toucher une tige de collision (10) par ladite partie de matériau semi-solide lorsque ladite partie de matériau semi-solide roule le long de ladite surface de travail de ladite barre d'arrondissement.
